# EUROPÄISCHE PATENTSCHRIFT

(11) **EP 2 781 559 B1**
(45) Veröffentlichungstag und Bekanntmachung des Hinweises auf die Patenterteilung: **06.04.2016**
(21) Anmeldenummer: 14000919.2
(22) Anmeldetag: 13.03.2014
(51) Int. Cl.: C09D 5/00, A23L 5/43

(54) **Wässrige Eierfärbemittelzusammensetzung umfassend mindestens einen Naturfarbstoff**
Aqueous egg dyeing agent comprising at least one natural dyestuff
Composition aqueuse de colorant pour oeufs comprenant au moins un colorant naturel

(30) Priorität: 22.03.2013 DE 102013004933
(43) Veröffentlichungstag der Anmeldung: 24.09.2014
(73) Patentinhaber: Brauns-Heitmann GmbH & Co. KG, 34414 Warburg (DE)
(72) Erfinder: Gibbels, Uwe, 34414 Warburg (DE); Füser, Katja, 59602 Rüthen (DE)
(74) Vertreter: Geskes, Christoph

(56) Entgegenhaltungen:
- EP-A1- 0 118 602
- EP-A1- 0 398 200
- EP-A1- 2 730 177
- WO-A1-02/49459
- DE-A1- 4 416 568
- DE-A1- 19 546 150
- DE-A1-102005 006 957
- Michaela Knieli: "Ostereier- bio und natürlich gefärbt", , 1. April 2011 (2011-04-01), Seiten 1-4, XP55132342, Wien Gefunden im Internet: URL:http://images.umweltberatung.at/htm/os tereierfaerben_infobl_diverses.pdf [gefunden am 2014-07-30]
- Constanze Schäfer: "Bunte Eier für`s Nest", Die P T A in der Apotheke 32(2003) Heft 4, 1. Januar 2003 (2003-01-01), Seiten 60-62, XP55132348, Gefunden im Internet: URL:http://www.pta-aktuell.de/media/pdf/PT A_04_060_062.pdf [gefunden am 2014-07-30]
- "Die Buntmacher- Eierfarben und-stifte", Test, 1. Januar 2009 (2009-01-01), Seiten 18-96, XP055132364, Gefunden im Internet: URL:http://www.test.de/filestore/t20090401 8.pdf?path=/protected/54/41/d207af08-dc34- 47fb-96d9-92a2ec53a41d-protectedfile.pdf&k ey=0881FF8CDC2850663F51CBA84F94C8B2D3DFC4D A [gefunden am 2014-07-30]
- Foodwatch: "Warum kaufen Sie eigentlich so viele Käfigeier?", , 1. April 2012 (2012-04-01), Seiten 1-9, XP055132369, Gefunden im Internet: URL:https://www.foodwatch.org/uploads/medi a/hintergrund_eier_kaefigeier_20120400.pdf [gefunden am 2014-07-30]
- MARCUS F-K: "NATURFARBSTOFFE. ÖDGK FACHGRUPPE FAERBEMITTEL C BERICHT DER ARBEITSGRUPPE NATURFARBEN", SOFW-JOURNAL SEIFEN, OELE, FETTE, WACHSE, VERLAG FUR CHEMISCHE INDUSTRIE, AUGSBURG, DE, Bd. 120, Nr. 16, 1. Dezember 1994 (1994-12-01), XP000483890, ISSN: 0942-7694

## Beschreibung

Die vorliegende Erfindung betrifft eine wässrige Eierfärbemittelzusammensetzung. Gegenstand der Erfindung sind wässige Eierfärbemittelzusammansetzungen gemäß den anhängenden Ansprüchen 1 - 13.

Das Färben von Eiern ist im Brauchtum sehr verbreitet, insbesondere zum Osterfest werden Eier gefärbt. Aber auch im Kunsthandwerk ist das Färben von Eiern verbreitet. Eier werden dabei insbesondere im gekochten Zustand, oder aber ausgelassen, das heißt nur der Schale, mit Farben behandelt.

Aus dem Stand der Technik ist eine Vielzahl von Techniken und Verfahren zum Färben von Eiern, sowohl gekochten als auch ausgeblasenen, bekannt. Üblicherweise werden Eier zum Färben in ein Farbbad gegeben und in diesem erhitzt. Dies bietet den Vorteil des gleichzeitigen Kochens und Färbens der Eier. Hierzu werden die Eier in einen Topf mit üblicherweise kaltem Wasser eingelegt, so dass die Eier gerade bedeckt sind. In das Wasser wird die jeweils gewünschte Eierfarbe eingegeben und das Färbebad erhitzt. Vom Sieden an lässt man dann das Färbebad mit den Eiern weiterkochen, bis die Eier in aller Regel hart gekocht sind, also etwa 6 bis 10 Minuten. Anschließend wird das Färbebad mit kaltem Wasser ausgespült und die gefärbten Eier werden zum Trocknen abgelegt. Dieses Färbeverfahren funktioniert mit Lebensmittelfarbstoffen. Setzt man jedoch Naturfarbstoffe, und hier insbesondere vegetabile und/oder animalische Naturfärbstoffe, insbesondere Blüten- und andere Pflanzenfarbstoffe, ein, wird mit diesem Verfahren keine ausreichende Färbung erzielt. Dies liegt wohl an einer Oberflächenreaktion, die beim Färbevorgang an der Eioberfläche stattfindet, und eine ausreichende Anhaftung solcher Naturfarbstoffe verhindert.

Aus der DE 10 2009 038 394 A1 ist ein alternatives Eierfärbeverfahren bekannt, mit welchem gleichzeitig intensive als auch wasserbeständige Farbeffekte auf einer Eierschale erzeugt werden können. Auch dort werden lösliche Lebensmittelfarben eingesetzt. Diese werden alkoholbasiert eingesetzt und über mindestens ein flächiges Material auf ein Ei übertragen. Zur Übertragung der alkoholbasierten Färbemittel im Sinne dieser Erfindung werden Trägerstoffe eingesetzt, nämlich Schellack und/oder Kopal. Aber auch mit diesem Verfahren ist es nicht möglich, Naturfarbstoffe insbesondere der vorgenannten Art mit ausreichender Farbkraft auf Eierschalen zu übertragen, gleich ob das Ei im rohen, ausgeblasenen, gekochten, warmen oder kalten Zustand vorliegt.

Es ist daher Aufgabe der vorliegenden Erfindung, eine Eierfärbemittelzusammensetzung zur Verfügung zu stellen, mit welcher unter Einsatz von Naturfarbstoffen eine ausreichende Färbung von Eiern, gleich in welchem Zustand, ermöglicht ist. Insbesondere sollen die Eier eine ausreichend kräftige Färbung aufweisend, und bevorzugt lichtecht und schweißecht sein.

Diese Aufgabe wird gelöst durch eine wässrige Eierfärbemittelzusammensetzung umfassend mindestens ein Bindemittel, mindestens eine anorganische oder organische Säure, sowie mindestens einen Naturfarbstoff, wobei die Zusammensetzung einen pH-Wert in einem Bereich von etwa 2,5 bis etwa 5,5 aufweist.

Naturfarbstoff im Sinne der vorliegenden Erfindung ist zu verstehen als ein Farbstoff auf Basis natürlicher Rohstoffe, und ist insbesondere ein vegetabiler und/oder animalischer Naturfarbstoff. Unter vegetabilen und/oder animalischen Naturfarbstoffen werden insbesondere Blüten- und andere Pflanzenfarbstoffe, die beispielsweise aus Blättern und Stielen oder aus insbesondere niederen Lebewesen gewonnene Farbstoffe wie echtes Karmin und Riboflavin, im Sinne der vorläufigen Anmeldung verstanden. Naturfarbstoffe im Sinne der vorliegenden Erfindung sind damit "nachwachsende" Rohstoffe. Der Begriff Pflanzenfarbstoffe bezeichnet als Oberbegriff alle in den verschiedenen Teilen von Pflanzen anzutreffenden und gegebenenfalls isolierbaren löslichen Farbstoffe einschließlich Pflanzenpigmente.

Der mindestens eine Naturfarbstoff, der von der erfindungsgemäßen Zusammensetzung umfasst ist, ist bevorzugt ausgewählt aus einer Gruppen umfassend Fruchtsaftkonzentrate, Fruchtsaftextrakte, Säfte, Gemüse, Gemüsesaftkonzentrate, Gemüsesaftextrakte, pürierte Früchte und/oder Gemüse, Curcumin, Riboflavin, echtes Karmin, Chlorophylle und/oder Chlorophylline. Chlorophylline sind in der Regel mit Natronlauge verseifte Chlorophylle, um deren Wasserlöslichkeit zu steigern, wobei zur Überkommung der Farbschwachheit und Lichtempfindlichkeit das üblicherweise natürlich komplex gebundene Magnesium ersetzt ist durch andere zweiwertige Metalle, Insbesondere Übergangsmetalle, vorzugsweise Kupfer. Unter den Begriff der Naturfarbstoffe Im Sinne der vorliegenden Erfindung fallen damit auch extrahierte Farbverbindungen derselben wie Curcumin (aus Gelbwurzgewächsen), Riboflavin (Vitamin B₂, insbesondere extrahiert aus Hefe, Grüngemüsen und Kartoffeln), echtes Karmin (gewonnen aus getrockneten weiblichen Nopal-Schildläusen), Chloropylle und die schon erwähnten Chlorophylline, wobei, wie die letztgenannten zeigen, auch chemisch zur Erzielung einer Wasserlöslichkeit behandelte Naturfarbstoffe im Sinne der vorliegenden Erfindung unter diesen Begriff fallen.

Besonders bevorzugt Im Sinne der vorliegenden Erfindung werden als Naturfarbstoffe eingesetzt Gemüseextrakte, echtes Karmin, Rote Bete, Traubenschalenextrakt und/oder Kupfer-Chlorophyllin.

Die vorstehenden Gewichtsprozentangaben für den mindestens einen Naturstoff beziehen sich dabei auf die tatsächlich eingesetzten Extraktmengen, Lösungsmengen et cetera (Zubereitung), und damit auf Naturstoffzubereitungen, wie sie insbesondere angeboten werden durch Hersteller. Dies bedeutet, dass beispielsweise bei Einsatz von echtem Karmin dieses 10 %ig in einer wässrigen Lösung eingesetzt ist, und sich daher die Gewichtsprozentangabe auf die 10 %ige wässrige Lösung von echtem Karmin bezieht

Der mindestens eine Naturfarbstoff wird vorzugsweise in einer Menge in einem Bereich von 5 Gew.-% bis 40 Gew.-%, weiter bevorzugt in einer Menge in einem Bereich von 8 Gew.-% bis 30 Gew.-%, weiter bevorzugt in einer Menge in einem Bereich von 9,5 Gew.-% bis 22 Gew.-%, wobei die Gewichtsprozentangaben jeweils bezogen sind auf die Gesamtmenge der erfindungsgemäßen Zusammensetzung, eingesetzt.

Das mindestens eine Bindemittel der erfindungsgemäßen Zusammensetzung ist vorteilhafterweise ein solches, welches ebenfalls eine natürliche Basis aufweist, und insbesondere aus nachwachsenden Rohstoffen gewonnen wird. Vorteilhafterweise ist das mindestens eine Bindemittel ausgewählt aus einer Gruppe umfassend Agar-Agar, Alginsäure, Alginate, Carrageen, Dextrin, Eiweiß, Gelatine, Gellan, Gummi arabicum, Guarkernmehl, Johannisbrotkernmehl, Pektin, modifizierte Cellulose, Stärke, modifizierte Stärke und/oder Xanthan. Besonders bevorzugt ist das mindestens eine Bindemittel ausgewählt aus einer Gruppe umfassend Dextrine und/oder Gelatine, und ist besonders bevorzugt ein Dextrin. Dextrine sind Abbauprodukte der Stärke, die bei unvollständiger Hydrolyse mit verdünnten Säuren oder durch Hitzeeinwirkung entstehen. Dextrine bestehen aus Glucose-Ketten. Dextrine werden vorzugsweise aus Mais oder Kartoffeln hergestellt.

Das mindestens eine Bindemittel ist erfindungsgemäß in einer Menge in einem Bereich von 4 Gew.-% bis 20 Gew.-%, bevorzugt in einer Menge In einem Bereich von 6 Gew.-% bis 15 Gew.-%, weiter bevorzugt in einem Bereich von 8 Gew.-% bis 13 Gew.-%, wobei die Gewichtsprozente jeweils bezogen sind auf die Gesamtmenge der erfindungsgemäßen Zusammensetzung, vorhanden.

Die mindestens eine anorganische oder organische Säure, die von der erfindungsgemäßen Zusammensetzung umfasst ist, ist vorteilhafterweise ausgewählt aus einer Gruppe umfassend Zitronensäure, Weinsäure, Äpfelsäure, Milchsäure, Gluconsäure, Essigsäure, Ameisensäure, Ascorbinsäure, Salzsäure, Glucono-delta-Lacton (Gluconsäure-5-Lacton), Fumarsäure, Isoascorbinsäure, Phosphorsäure, Adipinsäure und/oder Metaweinsäure. Besonders bevorzugt im Sinne der vorliegenden Erfindung ist die mindestens eine anorganische oder organische Säure ausgewählt aus einer Gruppe umfassend organische Säuren, und dabei wiederum bevorzugt ausgewählt aus einer Gruppe umfassend Zitronensäure, Weinsäure, Äpfelsäure und/oder Milchsäure, und ist weiter bevorzugt Milchsäure.

Die mindestens eine anorganische oder organische Säure ist von der erfindungsgemäßen Zusammensetzung umfasst in einer Menge in einem Bereich von vorzugsweise 0,3 Gew.-% bis 3 Gew.-%, weiter bevorzugt in einem Bereich von 0,35 Gew.-% bis 0,8 Gew.-%, noch weiter bevorzugt in einem Bereich von 0,4 Gew.-% bis 0,7 Gew.-%.
Besonders bevorzugt liegt der pH-Wert der wässrigen Eiermittelfärbezusammensetzung in einem Bereich von 2,5 bis 5,5, weiter bevorzugt bei 2,6 bis 4,6. In den erfindungsgemäßen pH-Wert-Bereichen sind der mindestens eine Naturfarbstoff, und insbesondere die besonders bevorzugt vorstehend genannten Naturfarbstoffe, stabil.

Die erfindungsgemäße Zusammensetzung umfasst vorteilhafterweise weiterhin mindestens ein Konservierungsmittel. Das mindestens eine Konservierungsmittel ist vorteilhafterweise in einer Menge in einem Bereich von 0,1 Gew.-% bis 0,5 Gew.-%, weiter bevorzugt in einem Bereich von etwa 0,2 Gew.-% bis etwa 0,3 Gew.-%, jeweils bezogen auf die Gesamtmenge der erfindungsgemäßen Zusammensetzung, von dieser umfasst. Das mindestens eine Konservierungsmittel ist vorteilhafterweise ausgewählt aus einer Gruppe umfassend Benzoesäure und deren Derivate und/oder Sorbinsäure und deren Derivate. Besonders bevorzugt im Sinne der vorliegenden Erfindung ist das mindestens eine Konservierungsmittel ausgewählt aus einer Gruppe umfassend Natriumbenzoat, Kaliumbenzoat, Kaliumsorbat und/oder Calciumsorbat. Besonders bevorzugt ist genau ein Konservierungsmittel eingesetzt. Besonders bevorzugt als Konservierungsmittel im Sinne der vorliegenden Erfindung ist Kaliumsorbat eingesetzt.

Die wässrige Eierfärbemlttelzusammensetzung umfasst weiterhin Wasser, vortellhafterweise In einer Menge in einem Bereich von etwa 60 Gew.-% bis etwa 95 Gew.-%, weiter bevorzugt In einem Bereich von etwa 68 Gew.-% bis etwa 92 Gew.-%, wobei die Gewichtsprozentangaben jeweils bezogen sind auf die Gesamtmenge der erfindungsgemäßen Zusammensetzung.

Eine besonders bevorzugte erfindungsgemäße Zusammensetzung umfasst ein Bindemittel in einer Menge in einem Bereich von etwa 6 Gew.-% bis etwa 12 Gew.-%, eine organische Säure in einer Menge in einem Bereich von etwa 0,3 Gew.-% bis etwa 0,9 Gew.-%, ein Konservierungsmittel in einer Menge in einem Bereich von etwa 0,15 Gew.-% bis etwa 0,3 Gew.-%, und mindestens einen Naturfarbstoff In einer Menge In einem Bereich von etwa 8 Gew.-% bis etwa 22 Gew.-%, wobei die Gewichtsprozente jeweils bezogen sind auf die Gesamtmenge der Zusammensetzung. Der Rest einer solchermaßen definierten besonders bevorzugten Zusammensetzung wird gebildet durch Wasser. Die Bestandteile dieser bevorzugten Zusammensetzung können dabei jeweils auch in den Mengen gemäß den Bereichen, die weiter vorstehend definiert sind, vorgesehen sein.

Soweit in der Beschreibung der vorliegenden Erfindung der Begriff "etwa" verwendet wird, so ist hierdurch für den angesprochenen Fachmann sogleich ersichtlich, dass die genannten Bereichsgrenzen keine starren Grenzen sind, sondern vielmehr durch auch geringfügige Abweichungen hiervon noch Ziel und Zweck der vorliegenden Erfindung erfüllen. Insbesondere sind dies Abweichungen von +/- 5 %, weiter bevorzugt +/- 2 %, von den angegebenen Bereichsgrenzen.

Vorteilhafterweise ist die erfindungsgemäße Zusammensetzung auf mindestens einem flächigen Material aufgebracht. Das flächige Material ist vorzugsweise ein Vlies, umfassend vorwiegend natürliche Fasern und/oder synthetische Fasern und/oder Kombinationen hieraus. Vorteilhafterweise werden zur Bildung des Vlieses vorwiegend natürliche Fasern, besonders bevorzugt Papierfasern, eingesetzt. Das Vlies kann ebenfalls unter Verwendung von synthetischen Fasern, vorzugsweise Polymerfasern und/oder Kombinationen aus natürlichen und synthetischen Fasern ausgebildet sein.

In einer bevorzugten Ausführung des Verfahrens kann das flächige Material als ein Vlies ausgebildet werden, wobei zur Bildung des Vlieses vorwiegend natürliche Fasern und hierbei vorzugsweise Papierfasern genutzt werden können. Das Vlies kann ebenfalls unter Verwendung von synthetischen Fasern ausgebildet werden.

Das flächige Material weist dabei vorzugsweise einen flexiblen Charakter auf, das heißt es hat gute Griffeigenschaften und lässt sich durch den Benutzer ausgezeichnet handhaben, indem das Ei mit dem flächigen Material umhüllt werden kann, in diesem gerollt werden kann oder das flächige Material in zusammengelegter Form zur Betupfung des Eies genutzt werden kann.

Zur Herstellung eines Vlieses auf Polymerbasis können jegliche fadenbildenden Polymere, die in ihrer Schmelze oder Lösung Eigenschaften aufweisen, welche die Bedingungen der Verspinnbarkeit erfüllen, eingesetzt werden. Beispielsweise sind Polymere aus der Gruppe der Polyolefine als Homopolymere oder Elends, Polyamide, Polyester, abbaubare Polymere, beispielsweise auf Polymilchsäurebasis oder Stärkebasis, zur Herstellung dieser Vlies geeignet. Als natürliche Fasern werden Fasern werden Fasern, vorwiegend umfassend Cellulose, Baumwolle, Leinen, Flachs oder Alginate bevorzugt.

Als vorteilhaft für die Behandlung von Eiern haben sich beispielsweise
- Vliese mit einem überwiegenden Anteil an Papierfasern,
- Vliese auf Polyolefinbasis unter Verwendung von Hydrophilierungsmitteln oder
- Vliese auf Polymerbasis mit einem Anteil an natürlichen Fasern

### erwiesen.

Als einlagig ausgebildete Materialen können beispielsweise Filterpapiere oder Vliesstoffe aus Fasern und/oder Filamenten, aus Stapel- oder Endlosfäden, die beispielsweise nach einem Spunbondverfahren oder Meltblownverfahren oder Kardierverfahren oder einem Nassspinnverfahren erzeugt worden sind, zur Herstellung des erfindungsgemäßen flächigen Materials für die Behandlung von Eiern verwendet werden.

Mehrlagige Vliese können beispielsweise auf Polymerbasis ausgebildet werden, wobei zudem Zwischenlagen ausgebildet werden können, die überwiegend oder vollständig aus natürlichen Fasern ausgebildet worden sind. Andererseits kann eine Lage eines Vlieses, welche überwiegend oder vollständig aus natürlichen Fasern gebildet wird, In einem flächigen Material auch als eine Außenlage eines mehrlagigen Gebildes in Form eines Laminats angeordnet werden. Alternativ zu Vliesstoffen oder Lagen aus Papier sind auch poröse Filmschichten zur Herstellung von mehrschichtigen flächigen Materialien möglich. Übliche Flächengewichte der Vliese oder Filterpapiere können zwischen 10 g/m² bis 20 g/m² liegen, wobei mehrlagige Gebilde In separaten Verarbeitungsprozessen oder in einem Verarbeitungsprozess, beispielsweise inline erzeugt werden können. Die Faser- oder Filamentdurchmesser können im Bereich von weniger als 0,001 mm bis mehr als 0,2 mm liegen, wobei die Faserquerschnitte rund, nichtrund, beispielsweise elliptisch, rechteckig, vieleckig oder multilobal, vorzugweise trilobal ausgebildet werden können. Die Fasern und/oder Filamente können als Monofilamente oder Mehrkomponentenfilamente ausgebildet werden. Die Bindung der Fasern innerhalb des Vlieses kann durch Thermobonding, adhäsives Bonding, beispielsweise mittels Schmelzkleber oder Vernadelung, Wasserstrahiverfestigung und dergleichen erfolgen.

Sowohl die Gestaltung der Faserquerschnitte, der Dicke und des Lageraufbaues des flächigen Materials als auch die Kombination von natürlichen und synthetischen Fasern haben in Bezug auf eine Erhöhung der Aufnahmefähigkeit und des Rückhaltevermögens des flächigen Materials für die erfindungsgemäße Zusammensetzung einen Einfluss. So kann ein leicht handhabbares Vlies zur Verfügung gestellt werden. Zugleich kann ein Abtropfen der im Vlies vorhandenen erfindungsgemäßen Zusammensetzung vermieden werden, so dass das Vlies mehrfach zur Behandlung von Eiern verwendet werden kann, ohne dass die Zusammensetzung auf die Hände des Benutzers gelangt

Vorzugsweise wird auf das flächige Material die erfindungsgemäße Zusammensetzung in einem Gewichtsverhältnis von Zusammensetzung zum flächigen Material in einem Bereich von 0,5 bis 5, vorzugsweise 1 bis 4,5, besonders bevorzugt 2 bis 4 aufgetragen.

Das flächige Material kann auch aus unterschiedlichen Materialien hergestellt sein und beispielsweise eine Kaschierung auf einer Seite mit einer für die Zusammensetzung undurchlässigen Folie oder einem Film aufweisen, so dass sichergestellt ist, dass bei richtiger Anwendung des flächigen Materials die Hände des Anwenders sauber bleiben. Dies kann auch erreicht werden durch Versehung des flächigen Materials nur auf einer Seite desselben mit der erfindungsgemäßen Zusammensetzung und einer Einstellung der Vlieseigenschaften dergestalt, dass die Zusammensetzung nicht bis auf die andere Seite des flächigen Materials durchdringt.

Aufgrund der Vorsehung eines spezifischen pH-Wert-Bereiches der erfindungsgemäßen wässrigen Zusammensetzung ist es möglich, Eier, gleich In welchem Zustand, das heißt ob roh, gekocht oder ausgeblasen, mit einer hinreichend kräftigen Färbung mit Naturfarbstoffen zu versehen, die insbesondere auch lichtecht und schweißecht ist und fest auf der Eloberfläche haftet. Vorteilhafterweise erfolgt die Aufbringung der Zusammensetzung auf gekochten Eiern, Insbesondere Im erkalteten Zustand, oder auf ausgeblasenen Eiern, insbesondere bei Temperaturen Im Bereich von 0 °C bis 40 °C, insbesondere Raumtemperatur (20 °C/22 °C/25 °C). Die Zusammensetzung ermöglicht eine Färbung von Eiern ohne Kochen derselben. Vorteilhafterweise wird eine Anfärbung des Eiinnern vermieden, was u.a. aufgrund des eingestellten pH-Wert-Bereiches erzielbar ist. Diese Vorteile werden durch Einsatz von Materialien, die überwiegend aus nachwachsenden Rohstoffen herstellbar sind, erzielt. Lediglich zur Herstellung einer Wasserlöslichkeit müssen der eine oder andere Naturfarbstoff einfach chemisch, in aller Regel durch eine Säure- oder Alkalibehandlung, umgesetzt werden und gegebenenfalls ein Metallkationsaustausch erfolgen, wobei derartige Farbstoffe im Sinne der vorliegenden Erfindung als Naturfarbstoffe angesehen werden. Auch das eingesetzte Bindemittel und die besonders bevorzugt eingesetzte organische Säure sind natürlichen Ursprungs, und können aus nachwachsenden Rohstoffen gewonnen werden. Die unter anderem besonders bevorzugt als Konservierungsmittel eingesetzte Sorbinsäure beziehungsweise deren Derivate Natriumsorbat und Kaliumsorbat als auch Milchsäure kommen so in der Natur vor, werden in aller Regel jedoch nicht aus nachwachsenden Rohstoffen gewonnen, jedoch naturidentisch hergestellt. Dies ist auch auf andere als Konservierungsmittel beziehungsweise Bindemittel und Säure genannte Stoffe übertragbar.

Die erflndungsgemäße wässrige Eierfärbezusammensetzung wird den Verbrauchern vorteilhafterweise angeboten nach Aufbringung auf dem mindestens einen flächigen Material, gegebenenfalls zusammen mit weiteren Bestandteilen wie einer Gebrauchsanleitung, Aufklebern, Handschuhen oder Ähnlichen in Form eines Kits. Das mit der erfindungsgemäßen Zusammensetzung versehene flächige Material ist vorteilhafterweise in einem Folienbeutel, vorzugsweise aus Polyethylen und/oder Polypropylen, weiter bevorzugt aus Hi-Density-Polyethylen, aufgenommen. Besonders bevorzugt ist der Beutel ausgebildet als Vierrand-Siegelbeutel. Der Beutel selbst kann dabei durchsichtig sein, er kann jedoch auch zum Schutz von der Zusammensetzung umfassten Naturfarbstoffen gefärbt sein. Durch Verpackung des flächigen Materiales mit der auf diesem aufgebrachten erfindungsgemäßen Zusammensetzung ist letztere besser vor durch Licht oder Sauerstoff hervorgerufenen Abbauprozessen geschützt.

Eier gleich welcher Art, also rohe, gekochte oder ausgeblasene, werden mit der erfindungsgemäßen wässrigen Zusammensetzung, bevorzugt zur Verfügung gestellt auf einem flächigen Material, insbesondere einem Vlies auf Basis von Papierfasern, betupft, gerollt, eingerieben et cetera, um den Naturfarbstoff auf die Eischale zu übertragen. Die Eioberfläche ist hierbei vorzugsweise trocken, kann jedoch auch etwas wässrig sein. Die Aufbringung erfolgt vorzugsweise bei Raumtemperatur (20 °C), kann aber In einem Temperaturbereich von etwa + 5° bis etwa + 30° vorgenommen werden. Die Temperatur der Eioberfläche kann dabei ebenfalls in dem vorgenannten Bereich liegen, kann jedoch auch höher, insbesondere bei bis zu etwa 80 °C, weiter bevorzugt bei bis zu etwa 50 °C liegen, je nach eingesetztem Naturfarbstoff.

Bei der Färbung von Eiern mit der erfindungsgemäßen Zusammensetzung kann weiterhin auch vorgesehen sein, dass ein Ei mit mehreren Zusammensetzungen, insbesondere aufgebracht auf einem flächigen Material wie einem Vlies, behandelt wird, um auf diese Weise unterschiedliche Farbeffekte auf der Eioberfläche zu erzeugen.

Diese und weitere Vorteile der vorliegenden Erfindung werden anhand der nachfolgenden Beispiele erläutert.

Es wurden insgesamt vier wässrige Zusammensetzungen hergestellt. Zusammensetzung A wies 0,23 Gew.-% Kallumsorbat, 75,85 Gew.-% Wasser, 8,5 Gew.-% Dextrin, 0,43 Gew.-% Milchsäure und 15 Gew.-% pulverförmiger Gemüseextrakt MDO 053, bezogen von Schumann & Sohn GmbH, Karlsruhe, Deutschland, der Rest Wasser, mit welchem eine maisgelbe Färbung eines Eis ermöglicht werden soll, auf, hergestellt durch Mischen der verschiedenen Bestandteile bei Raumtemperatur in Wasser, wobei das Mischen durch Rühren per Hand, aber auch unter Zuhilfenahme üblicher Rühr- beziehungsweise Mischgeräte vorgenommen werden kann. Diese Art der Zubereitung erfolgte für alle Zusammensetzungen A bis D. Die solchermaßen hergestellte Zusammensetzung A wies einen pH-Wert von 3,4 auf.

Entsprechend wurden Zusammensetzungen B, C und D hergestellt, wobei Zusammensetzungen B 0,22 Gew.-% Kaliumsorbat, 71,23 Gew.-% Wasser, 8 Gew.-% Dextrin, 0,55 Gew.-% Milchsäure, 10 Gew.-% wässrige Zubereitung mit echtem Karmin (10 Gew.-%, bezogen auf die Gesamtmenge der Zubereitung) in flüssigem Zustand, bezogen von Sensient Food Colors Germany GmbH, Geesthacht, Deutschland, wobei die Zubereitung weiterhin Kaliumhydroxid und Maltodextrin als Träger aufweist, sowie 10 Gew.-% Rote Bete Pulver, das Maltodextrin als Träger aufweist, bezogen von Schumann & Sohn GmbH, Karlsruhe, Deutschland, der Rest Wasser. Die hierdurch erhaltene erfindungsgemäße Zusammensetzung war pinkfarben, und wies einen pH-Wert von 4,45 auf.

Zusammensetzung C wurde hergestellt aus 0,22 Gew.-% Kaliumsorbat, 71,38 Gew.-% Wasser, 8 Gew.-% Dextrin, 0,4 Gew.-% Milchsäure und 20 Gew.-% Traubenschalenextrakt, der neben dem Traubenschalenextrakt noch 10 Gew.-% Maltodextrin, bezogen auf die Gesamtmenge der Zubereitung, als Träger aufweist, bezogen von Schumann & Sohn GmbH, Karlsruhe, Deutschland, der Rest Wasser. Die Zusammensetzung C war lilafarben und wies einen pH-Wert von 2,7 auf.

Zusammensetzung D wurde hergestellt aus 0,22 Gew.-% Kaliumsorbat, 71,08 Gew.-% Wasser, 8 Gew.-% Dextrin, 0,7 Gew.-% Milchsäure und 20 Gew.-% wässrige Kupfer-Chlorophyllin-Zubereitung mit etwa 10 Gew.-% Kupfer-Chlorophyllin, bezogen auf die Gesamtmenge der Zubereitung, sowie Wasser, Propylenglykol und Polysorbat 80, bezogen von Sensient Food Colors Germany GmbH, Geesthacht, der Rest Wasser. Zusammensetzung D war grün und wies einen pH-Wert von 4,49 auf.

Die solchermaßen hergestellten Zusammensetzungen A bis D wurden auf ein einlagiges Vlies aus Papierfasern aufgebracht bei einer Temperatur von 20 °C, und bei dieser Temperatur wurden dann mittels des Vlieses und der auf diesem aufgebrachten Zusammensetzungen A bis D Schalen von gekochten, abgekühlten Eiern, wobei die Oberfläche der Eischalen ebenfalls eine Raumtemperatur von 20 °C aufwies, gefärbt durch Reibung des Tuches auf der Eioberfläche. Hierdurch konnte eine starke Färbung erhalten werden. Die Eier wiesen auch nach mehrmaligen Anfassen mit nicht behandschuhten Fingern keine Flecken auf durch Übertragung der Farbe auf die Finger, so dass diese als schweißecht angesprochen werden können. Die Eier wiesen auch eine gute Lichtechtheit nach Lagerung von drei bis zehn Tagen auf.

Mit der vorliegenden Erfindung wird eine Eierfärbemittelzusammensetzung zur Verfügung gestellt, welche vorzugsweise auf einem flächigen Material, insbesondere einem Vlies, aufgebracht ist, und die überwiegend Inhaltsstoffe auf Grundlage nachwachsender Rohstoffe oder hierzu naturidentischer Stoffe umfasst, mit welcher eine gute, verbrauchergerechte Färbewirkung erzeugt werden kann.

## Patentansprüche

1. Wässrige Eierfärbemittelzusammensetzung umfassend mindestens ein Bindemittel, mindestens eine anorganische oder organische Säure, sowie mindestens einen Naturfarbstoff, wobei die Zusammensetzung einen pH-Wert in einem Bereich von 2,5 bis 5,5 aufweist und wobei das Bindemittel in einer Menge in einem Bereich von 4 Gew.-% bis 20 Gew.-%, bezogen auf die Gesamtmenge der Zusammensetzung, vorliegt.

2. Zusammensetzung gemäß Anspruch 1, **dadurch gekennzeichnet, dass** diese weiterhin mindestens ein Konservierungsmittel umfasst.

3. Zusammensetzung gemäß einem der vorhergehenden Ansprüche, **dadurch gekennzeichnet, dass** das mindestens eine Bindemittel ausgewählt ist aus einer Gruppe umfassend Agar-Agar, Alginsäure, Alginate, Carrageen, Dextrin, Eiweiß, Gelatine, Gellan, Gummi arabicum, Guarkernmehl, Johannisbrotkernmehl, Pektin, modifizierte Cellulose, Stärke, modifizierte Stärke und/oder Xanthan.

4. Zusammensetzung gemäß einem der vorhergehenden Ansprüche, **dadurch gekennzeichnet, dass** die mindestens eine anorganische oder organische Säure ausgewählt ist aus einer Gruppe umfassend Zitronensäure, Weinsäure, Äpfelsäure, Milchsäure, Gluconsäure, Essigsäure, Ameisensäure, Ascorbinsäure, Salzsäure, Glucono-delta-Lacton, Fumarsäure, Isoascorbinsäure, Phosphorsäure, Adipinsäure und/oder Metaweinsäure.

5. Zusammensetzung gemäß einem der vorhergehenden Ansprüche, **dadurch gekennzeichnet, dass** die Säure in einer Menge in einem Bereich von 0,3 Gew.-% bis 3 Gew.-%, bezogen auf die Gesamtmenge der Zusammensetzung, von dieser umfasst ist.

6. Zusammensetzung gemäß einem der vorhergehenden Ansprüche, **dadurch gekennzeichnet, dass** der mindestens eine Naturfarbstoff ausgewählt ist aus einer Gruppe umfassend Fruchtsaftkonzentrate, Fruchtsaftextrakte, Säfte, Gemüse, Gemüsesaftkonzentrate, Gemüsesaftextrakte, pürierte Früchte und/oder Gemüse, Curcumin, Riboflavin, echtes Karmin, Chlorophyll und/oder Chlorophylline.

7. Zusammensetzung gemäß einem der vorhergehenden Ansprüche, **dadurch gekennzeichnet, dass** der mindestens eine Naturfarbstoff in einer Menge in einem Bereich von 5 Gew.-% bis 40 Gew.-%, bezogen auf die Gesamtmenge der Zusammensetzung, von dieser umfasst ist.

8. Zusammensetzung gemäß einem der Ansprüche 2 bis 7, **dadurch gekennzeichnet, dass** das mindestens eine Konservierungsmittel in einer Menge in einem Bereich von 0,1 Gew.-% bis 0,5 Gew.-%, bezogen auf die Gesamtmenge der Zusammensetzung, von dieser umfasst ist.

9. Zusammensetzung gemäß einem der vorhergehenden Ansprüche, **dadurch gekennzeichnet, dass** diese ein Bindemittel in einer Menge in einem Bereich von 6 Gew.-% bis 12 Gew.-%, eine organische Säure in einer Menge in einem Bereich von 0,3 Gew.-% bis 0,9 Gew.-%, ein Konservierungsmittel in einer Menge in einem Bereich von 0,15 Gew.-% bis 0,3 Gew.-%, und mindestens einen Naturfarbstoff in einer Menge in einem Bereich von 8 Gew.-% bis 22 Gew.-%, wobei die Gewichtsprozente jeweils bezogen sind auf die Gesamtmenge der Zusammensetzung, umfasst.

10. Zusammensetzung gemäß Anspruch 9, **dadurch gekennzeichnet, dass** als Bindemittel Dextrin eingesetzt ist.

11. Zusammensetzung gemäß einem der vorhergehenden Ansprüche, **dadurch gekennzeichnet, dass** diese auf mindestens einem flächigen Material aufgebracht ist.

12. Zusammensetzung gemäß Anspruch 11, **dadurch gekennzeichnet, dass** das flächige Material ein Vlies, umfassend vorwiegend natürliche Fasern und/oder synthetische Fasern und/oder Kombinationen hieraus, ist.

13. Zusammensetzung gemäß einem der Ansprüche 11 oder 12, **dadurch gekennzeichnet, dass** das flächige Material ein- oder mehrlagig ausgebildet ist.

## Claims

1. Aqueous egg-colorant composition comprising at least one binder, at least one inorganic or organic acid and at least one natural dye, wherein the composition has a pH value in a range of from 2.5 to 5.5 and wherein the binder is present in an amount in a range of from 4 % by weight to 20 % by weight, based on the total amount of the composition.

2. Composition according to claim 1, **characterised in that** it further comprises at least one preservative.

3. Composition according to either one of the preceding claims, **characterised in that** the at least one binder is selected from a group comprising agar-agar, alginic acid, alginates, carrageenan, dextrin, albumen, gelatin, gellan, gum arabic, guar gum, locust bean gum, pectin, modified cellulose, starch, modified starch and/or xanthan.

4. Composition according to any one of the preceding claims, **characterised in that** the at. least one inorganic or organic acid is selected from a group comprising citric acid, tartaric acid, malic acid, lactic acid, gluconic acid, acetic acid, formic acid, ascorbic acid, hydrochloric acid, glucono-delta-lactone, fumaric acid, isoascorbic acid, phosphoric acid, adipic acid and/or meta-tartaric acid.

5. Composition according to any one of the preceding claims, **characterised in that** the acid is present therein in an amount in a range of from 0.3 % by weight to 3 % by weight, based on the total amount of the composition.

6. Composition according to any one of the preceding claims, **characterised in that** the at least one natural dye is selected from a group comprising fruit juice concentrates, fruit juice extracts, juices, vegetables, vegetable juice concentrates, vegetable juice extracts, puréed fruits and/or vegetables, curcumin, riboflavin, natural carmine, chlorophyll and/or chlorophyllins.

7. Composition according to any one of the preceding claims, **characterised in that** the at least one natural dye is present therein in an amount in a range of from 5 % by weight to 40 % by weight, based on the total amount of the composition.

8. Composition according to any one of claims 2 to 7, **characterised in that** the at least one preservative is present therein in an amount in a range of from 0.1 % by weight to 0.5 % by weight, based on the total amount of the composition.

9. Composition according to any one of the preceding claims, **characterised in that** it comprises a binder in an amount in a range of from 6 % by weight to 12 % by weight, an organic acid in an amount in a range of from 0.3 % by weight to 0.9 % by weight, a preservative in an amount in a range of from 0.15 % by weight to 0.3 % by weight and at least one natural dye in an amount in a range of from 8 % by weight to 22 % by weight, the percentages by weight in each case being based on the total amount of the composition.

10. Composition according to claim 9, **characterised in that** dextrin is used as binder.

11. Composition according to any one of the preceding claims, **characterised in that** it is applied to at least one planar material.

12. Composition according to claim 11, **characterised in that** the planar material is a non-woven material, comprising predominantly natural fibres and/or synthetic fibres and/or combinations thereof.

13. Composition according to either one of claims 11 and 12, **characterised in that** the planar material is of single-layered or multi-layered construction.

## Revendications

1. Composition aqueuse de colorant pour oeufs comprenant au moins un liant, au moins un acide inorganique ou organique, ainsi qu'au moins un colorant naturel, dans laquelle la composition présente une valeur de pH comprise dans la plage de 2,5 à 5,5 et dans laquelle le liant est présent en une quantité comprise dans une plage de 4 % en poids à 20 % en poids, rapportée à la quantité totale de la composition.

2. Composition selon la revendication 1, **caractérisée en ce qu'**elle comprend en outre au moins un agent de conservation.

3. Composition selon l'une quelconque des revendications précédentes, **caractérisée en ce que** ledit au moins un liant est choisi dans un groupe comprenant l'agar-agar, l'acide alginique, les alginates, le carragheen, la dextrine, l'albumine, la gélatine, la gellane, la gomme arabique, la gomme de guar, la gomme de caroube, la pectine, la cellulose modifiée, la fécule, la fécule modifiée et/ou le xanthane.

4. Composition selon l'une quelconque des revendications précédentes, **caractérisée en ce que** ledit au moins un acide inorganique ou organique est choisi dans un groupe comprenant l'acide citrique, l'acide tartrique, l'acide malique, l'acide lactique, l'acide gluconique, l'acide acétique, l'acide formique, l'acide ascorbique, l'acide chlorhydrique, la delta-gluconolactone, l'acide fumarique, l'acide isoascorbique, l'acide phosphorique, l'acide adipique et/ou l'acide métatartrique.

5. Composition selon l'une quelconque des revendications précédentes, **caractérisée en ce que** l'acide est présent en une quantité comprise dans une plage de 0,3 % en poids à 3 % en poids, rapportée à la quantité totale de la composition.

6. Composition selon l'une quelconque des revendications précédentes, **caractérisée en ce que** ledit au moins colorant naturel est choisi dans un groupe comprenant les concentrés de jus de fruits, les extraits de jus de fruits, les jus, les légumes, les concentrés de jus de légumes, les extraits de jus de légumes, les purées de fruits et/ou de légumes, la curcumine, la riboflavine, le carmin véritable, la chlorophylle et/ou la chlorophylline.

7. Composition selon l'une quelconque des revendications précédentes, **caractérisée en ce que** ledit au moins un colorant naturel est présent en une quantité comprise dans une plage de 5 % en poids à 40 % en poids, rapportée à la quantité totale de la composition.

8. Composition selon l'une quelconque des revendications 2 à 7, **caractérisée en ce que** ledit au moins un agent de conservation est présent en une quantité comprise dans une plage de 0,1 % en poids à 0,5 % en poids, rapportée à la quantité totale de la composition.

9. Composition selon l'une quelconque des revendications précédentes, **caractérisée en ce qu'**elle comprend un liant en une quantité comprise dans une plage de 6 % en poids à 12 % en poids, un acide organique en une quantité comprise dans une plage de 0,3 % en poids à 0,9 % en poids, un agent de conservation en une quantité comprise dans une plage de 0,15 % en poids à 0,3 % en poids, et au moins un colorant naturel en une quantité comprise dans une plage de 8 % en poids à 22 % en poids, dans laquelle les pourcentages pondéraux sont chaque fois rapportés à la quantité totale de la composition.

10. Composition selon la revendication 9, **caractérisée en ce que** la dextrine est utilisée comme liant.

11. Composition selon l'une quelconque des revendications précédentes, **caractérisée en ce qu'**elle est déposée sur au moins un matériau plan.

12. Composition selon la revendication 11, **caractérisée en ce que** le matériau plan est un non-tissé, comprenant principalement des fibres naturelles et/ou des fibres synthétiques et/ou des combinaisons de celles-ci.

13. Composition selon l'une des revendications 11 ou 12, **caractérisée en ce que** le matériau plan est réalisé en une ou plusieurs couches.
